(19) Europäisches Patentamt
European Patent Office
Office européen des brevets

(11) Publication number: 0 050 982
B1

# (12) EUROPEAN PATENT SPECIFICATION

(45) Date of publication of patent specification: 02.01.85

(51) Int. Cl.⁴: C 08 L 27/06

(21) Application number: 81305040.8

(22) Date of filing: 26.10.81

## (54) Smoke suppressant polymer compositions.

(30) Priority: 27.10.80 GB 8034566

(43) Date of publication of application:
05.05.82 Bulletin 82/18

(45) Publication of the grant of the patent:
02.01.85 Bulletin 85/01

(84) Designated Contracting States:
AT BE CH DE FR GB IT LI LU NL SE

(56) References cited:
DE-B-1 200 795
US-A-4 035 324
US-A-4 085 081

(73) Proprietor: BICC Public Limited Company
21, Bloomsbury Street
London, WC1B 3QN (GB)

(72) Inventor: Ness, Diane Elizabeth Marjorie
19 Desford Road
Canning Town London E.16 (GB)
Inventor: Walker, Richard Thomas
199 Pield Heath Road Hillingdon
Uxbridge Middlesex (GB)

(74) Representative: Poole, Michael John et al
BICC plc Patents Department 38 Wood Lane
London, W12 7DX (GB)

EP 0 050 982 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to polymer compositions containing major amounts (at least one third of total polymer content) of homopolymers and/or copolymers of vinyl chloride, all hereinafter called 'PVC compounds' for brevity.

PVC compounds frequently contain a plasticiser and a stabiliser, and in most cases a filler, and when these are suitably chosen the compounds have excellent physical, chemical and electrical properties and are widely used for the insulation and/or sheathing of electric wires and cables; also for example floor and wall coverings, upholstery fabrics, tapes, film, belting, extruded profiles, hose and as mouldings, coatings (often applied in plastisol form) etc.

The significant chlorine content of PVC gives compositions based on it a degree of flame retardance, but the results achieved vary with the formulation and are particularly sensitive to the type and amount of plasticiser (usually the most flammable major ingredient); even compositions specially formulated for high oxygen index will burn, and/or will decompose to liberate vapours that burn, if exposed to a sufficiently high temperature, for example by a fire breaking out in a building in which products containing the compositions are installed. When this happens dense smoke is liable to be generated and in a situation where the amount of the polymer composition present is large, this may significantly increase the danger of the fire by obscuring its location and/or hampering both escape and fire-fighting.

In recent years, a number of additives that have a broad, if not universal, tendency to reduce smoke generation when added to such polymer compositions have been discovered, but further improvement is desirable. Such an additive is hereinafter called a 'smoke suppressant' which expression, for the avoidance of uncertainty, is hereby defined as a substance which, when added in a small amount to the other ingredients of the specific polymer composition being referred to, reduces the amount of smoke generated on burning under at least some conditions. Some smoke suppressants can be regarded as constituting a filler also.

We have now discovered that the effect of known smoke suppressants can be enhanced to a surprising extent by using a plasticiser (or more than one plasticiser) of a particular kind.

In accordance with the invention, a polymer composition comprises: polymeric material of which at least one third is constituted by a homopolymer or copolymer of vinyl chloride; 10—100 parts per hundred parts of total polymeric material of plasticiser, being at least 30% of the total plasticiser present, selected from the organic esters of formula

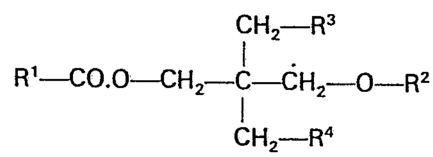

in which

$R^1$ is selected from the alkyl groups up to C20;
$R^2$ is selected from H, the alkyl and acyl groups up to C20; and
$R^3$ and $R^4$, are independently selected from OH, alkoxy groups up to C20, and acyloxy groups up to C20, provided that not more than one of $R^2$, $R^3$ and $R^4$ is included among H, OH and and alkyl,
such group (in every case) optionally having one or more than one substituent selected from alkyl groups up to C20, acyl groups up to C20 and acyloxy groups up to C20;

and effective amounts of at least one stabiliser and at least one smoke suppressant. (Parts herein are by weight).

Preferred copolymers of vinyl chloride are those (including graft copolymers) in which the copolymerisable monomer is ethylene, propylene, vinylidene chloride, acrylic and methacrylic acids and their esters, and vinyl acetate.

The compositions need not contain any other polymer, but when there is another polymer present it may be any that is compatible with the other ingredients; in particular it may be a chlorine-containing polymer or it may be a polymer not containing chlorine. An example is a copolymer of ethylene with 5—60% vinyl acetate (EVA).

More than one plasticiser may be used, though the total plasticiser content should not normally exceed 100 parts; in the case of flexible PVC compounds at least one must be a primary plasticiser, but one or more may be a secondary plasticiser (sometimes called an extender) that would not be effective as a plasticiser in the absence of the other plasticiser or plasticisers (the plasticiser defined above as a characteristic of the invention may be either primary or secondary).

Preferably, however, a single plasticiser, or more than one plasticiser selected from the group defined, is used.

One preferred group of plasticisers has the formula

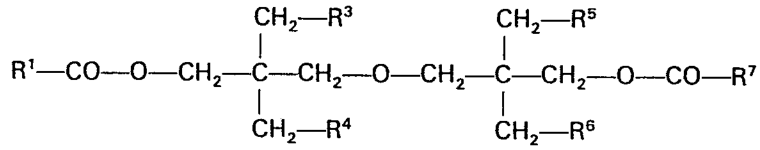

in which $R^5$ and $R^6$ are selected from the same groups as $R^3$ and $R^4$, and $R^7$ from the same groups as $R^1$, all listed above, provided that no more than two of $R^3$, $R^4$, $R^5$, and $R^6$ is included among H, OH and lower alkyl. More specifically we prefer plasticisers of either of the formulae specified in which $R^1$ and $R^7$ (if present) are unsubstituted alkyl groups; $R^2$ (if present) is an unsubstituted acyl group, and $R^3$, $R^4$, $R^5$ and $R^6$ (to the extent present) are unsubstituted acyloxy groups. Preferably all the R groups have at least 3 carbon atoms. Most preferred are the fatty acid hexa-esters of dipentaerythritol and in particular the mixed butyratecaprylate hexa-esters commercially available under the trademarks Bisoflex OBC and Hercoflex 707, and the corresponding esters of pentaerythritol.

For most of the plasticisers, and most of the applications, contemplated, the total plasticiser content will be in the range 30—90 parts per hundred parts of total polymer.

The stabiliser may be conventional and does not require description; naturally the amount required will depend upon the type selected and upon the end-use.

The benefits of the invention appear to be obtained with all known classes of smoke suppressant additives but more especially with those that affect pyrolytic mechanisms in the condensed phase rather than combustion processes in the flame zone. At present we prefer to select from: (i) Smoke suppressant molybdenum compounds especially (but not exclusively) (a) of a kind described by F. W. Moore in a paper entitled "Advances in the Use of Molybdenum Additives as Smoke Suppressants for PVC and Results of Mechanism Studies" presented at the Polymer Conference in Detroit, Michigan, USA on 24th May, 1977 (see also US Patent 3870679), for example molybdic oxide (b) the proprietary materials sold under the trade mark Kemgard as Kemgard 911A and Kemgard 911C, which are believed to be of the kind described and claimed in British Patent 1551472, and (c) ammonium dodecaphosphomolybdate.

(ii) metal oxide solid solutions of the kinds described in British Patent 1521531 and British Patent Application—2032908A, for example the product sold as "Ongard II" which is believed to be a solid solution of the oxides of zinc, magnesium and calcium.

(iii) metal salts of the kind described in British Patent 1490233, for example the commercial hydrated zinc borate sold under the designations "ZB—2335" and Firebrake ZB.

(iv) magnesium compounds, especially the hydroxide basic carbonate and carbonate and the proprietary compound sold under the designation "Reomol DV243".

These smoke suppressants can be used at customary levels. Naturally these vary from material to material, but in most cases in the range 0.01—70 parts per hundred total polymer (or more in the case of smoke suppressants that are also fillers). 0.1—20 parts (and more especially 2—10) can be considered a preferred range.

In most cases the polymer compositions of the invention will include at least one filler; a wide range may be used but (setting aside the smoke suppressant fillers already discussed) we prefer to use fillers that enhance flame retardance and/or inhibit emission of hydrogen chloride on combustion. More particularly, we prefer to use one or more of alumina trihydrate calcium carbonate dolomite especially in grades of small particle size (of the order of 0.1 micrometres and below for the carbonates when acid-binding properties are desired, and in other cases 10 micrometres or below).

When a high degree of resistance to flame propagation is desired, preferably the compositions also include a flame-retardant additive, preferably antimony trioxide. Among other ingredients that may be included if desired are lubricants, (e.g. calcium stearate), crosslinking agents, crosslinking promoters, radiation sensitisers, colourants, antioxidants, U.V. stabilisers, blowing-agents, and anti-static agents, all in customary amounts.

In appropriate cases the compositions can be cross-linked by electron or gamma radiation, or by other known techniques.

The invention is illustrated by the following tabulated examples (including comparison examples, indicated by letters to distinguish them immediately from numbered examples of the invention).

In all the examples, the polymer composition comprises 100 parts of the same suspension-grade vinyl chloride homopolymer of K-value 71 (calculated from relative viscosity data obtained by the method in ISO R 174), 50 parts of the filler specified, 8 parts of a proprietary stabiliser paste (of which 2 parts is a conventional plasticiser), 50 parts total plasticiser (excluding that in the stabiliser paste), 1 part calcium stearate (lubricant) and varying amounts (or none) of smoke suppressant.

The various formulations were compounded on a 2-roll mill and pressed at 160 degrees C into sheets of appropriate thickness. Samples, cut from a sheet 1.0±0.1 mm thick were tested for smoke generation according to ASTM E662—79 in the flaming mode using an N.B.S. smoke chamber supplied by American Instrument Co. (Aminco) (results quoted as $D_m$corr, the maximum specific optical

density measured and corrected for smoke deposition on the optical detection system and as percentage transmittance). Samples cut from a sheet 3 mm thick were tested for oxygen index according to BS2782: Part 1: 1978, Method 141D (results as % oxygen).

Tables 1—3 identify materials (plasticisers, smoke suppressants and fillers) used in the examples that follow.

TABLE 1
Plasticisers

| Designation herein | Chemical type | Trade mark | Supplier |
|---|---|---|---|
| DOP | di(2-ethyl hexyl)phthalate (commercial dioctyl phthalate) | — | Various |
| 530 | a trialkyl (straight chain C7—C9) trimellitate | Monoplas 530 | Scott-Bader Ltd. |
| G62 | epoxidised soyabean oil | Paraplex G62 | Rohm & Haas Co. |
| DOA | di(2-ethyl hexyl) adipate | Bisoflex DOA | BP Chemicals Ltd. |
| 107 | a mixed ester based on C4—C6 linear dibasic acids (mainly aliphatic with very small proportions of phthalate) | Bisoflex 107 | BP Chemicals Ltd. |
| OBC | mixed butyrate-caprylate hexa-ester of dipentaerythritol | Bisoflex OBC | BP Chemicals Ltd. |
| DPH | dipentaerythritol hexacaprylate | DPHC | BP Chemicals Ltd. |
| LP3 | Pentaerythritol tetra pelargonate | Reolube LP3600 | Ciba-Geigy Ltd. |
| LP5 | Mixed acid ($C_5$ to $C_7$ tetra ester of pentaerythritol | Reolube LP504 | Ciba-Geigy Ltd. |
| LP6 | Mixed acid ($C_5$ to $C_8$) tetra ester of pentaerythritol | Reolube LP602 | Ciba-Geigy Ltd. |
| SR2 | Pentaerythritol tetra-acrylate | Ancomer SR295 | Ancomer Ltd. |
| SR3 | Dipentaerythritol penta-acrylate | Ancomer SR399 | Ancomer Ltd. |

TABLE 2
Smoke suppressants

| Designation herein | Chemical type | Trade mark | Supplier |
|---|---|---|---|
| $MoO_3$ | molybdic oxide | MFR | Climax Molybdenum |
| Ongard | believed to be a solid solution comprising oxides of zinc, magnesium and calcium | Ongard II | Anzon Ltd. |
| ZB-2335 | hydrated zinc borate | ZB-2335 | Borax Corp. |
| 911A | a complex molybdate carried on particles of calcium carbonate | Kemgard 911A | Sherwin-Williams Co. |
| 911C | a complex molybdate carried on particles of talc. | Kemgard 911C | Sherwin-Williams Co. |
| DV243 | a magnesium compound | Reomol DV243 | Ciba-Geigy Ltd. |
| ADPM | ammonium dodecaphospho-molybdate | — | Various |

TABLE 3
Fillers

| Designation herein | Chemical type | Particle size | Trade mark | Supplier |
|---|---|---|---|---|
| 7ML | calcium carbonate | 95% below 10 micrometres | Snowcal 7ML | Blue Circle Ltd. |
| 710 | hydrated alumina (alumina trihydrate) | below 2 micrometres. | Hydral 710 | Alcoa Ltd. |
| DLMC | magnesium basic carbonate | 2—7 micrometres | Darlington | The Chemical & Insulating Co. Ltd. |

Table 4 illustrates the synergistic effect of using a plasticiser of the kind described (specifically OBC) in combination with a smoke suppressant (specifically $MoO_3$) in contrast with the much smaller effect of using the same smoke suppressant with other aliphatic and aromatic plasticisers:

TABLE 4

| Example | Plasticiser | Filler | Composition<br>Smoke suppressant (parts by weight) | NBS smoke chamber test<br>Corrected maximum optical density $D_m$corr | Transmittance T(%) | Oxygen index | Compare with example(s) |
|---|---|---|---|---|---|---|---|
| A | DOP | 7ML | none | 310 | 0.45 | 23.0 | — |
| B | DOP | 7ML | $MoO_3$ (10) | 170 | 5.1 | 27.2 | A |
| C | DOA | 7ML | none | 330 | 0.31 | 22.1 | — |
| D | DOA | 7ML | $MoO_3$ (10) | 170 | 5.1 | 26.3 | C |
| E | 107 | 7ML | none | 310 | 0.45 | 22.5 | — |
| F | 107 | 7ML | $MoO_3$ (10) | 180 | 4.3 | 27.2 | E |
| G | OBC | 7ML | none | 300 | 0.53 | 22.6 | A,C,E |
| 1 | OBC | 7ML | $MoO_3$ (10) | 80 | 24 | 24.8 | B,D,F,G |

Table 5 illustrates how broadly similar results are obtained with a variety of different known smoke suppressants.

TABLE 5

| Example | Plasticiser | Filler | Composition<br>Smoke suppressant (parts by weight) | NBS smoke chamber test<br>Corrected maximum optical density $D_m$corr | Transmittance T(%) | Oxygen index | Compare with example(s) |
|---|---|---|---|---|---|---|---|
| H | DOP | 7ML | Ongard (10) | 200 | 3.0 | 24.8 | A |
| 2 | OBC | 7ML | Ongard (10) | 140 | 8.7 | 26.3 | A,H |
| J | DOP | 7ML | ZB2335 (10) | 250 | 1.2 | 26.1 | A |
| 3 | OBC | 7ML | ZB2335 (10) | 150 | 7.3 | 25.2 | A,J |
| 4 | OBC | 7ML | 911A (10) | 110 | 14 | 25.9 | A,G |
| 5 | OBC | 7ML | 911C (10) | 120 | 12 | 24.6 | A,G |
| 6 | OBC | 7ML | DV243 (10) | 130 | 10 | 24.2 | A,G |
| 7 | OBC | 7ML | ADPM (5) | 140 | 8.7 | 23.7 | A,G |
| 8 | OBC | 7ML | $MoO_3$ (5) +ZB2335 (5) | 90 | 20 | 26.1 | A,G,J 1,3 |

Table 6 illustrates the invention in the field of reactive (flame retardant and smoke suppressant) fillers.

TABLE 6

| | Composition | | | NBS smoke chamber test | | | |
|---|---|---|---|---|---|---|---|
| Example | Plasticiser | Smoke suppressant filler | Additional smoke suppressant (parts by weight) | Corrected maximum optical density $D_m$corr | Transmittance T(%) | Oxygen index | Compare with example(s) |
| K | DOP | 710 | none | 310 | 0.45 | 24.8 | A |
| 9 | OBC | 710 | none | 200 | 3.0 | 27.5 | G |
| L | DOP | DLMC | none | 300 | 0.53 | 25.7 | A |
| 10 | OBC | DLMC | none | 230 | 1.8 | 28.7 | G |
| M | DOP | 710 | $MoO_3$ (10) | 180 | 4.3 | 30.5 | K |
| 11 | OBC | 710 | $MoO_3$ (10) | 80 | 24 | 32.5 | 9,M |
| N | DOP | 710 | Ongard (15) | 230 | 1.8 | 30.0 | K |
| 12 | OBC | 710 | Ongard (15) | 160 | 6.1 | 31.1 | 9,N |
| 13 | OBC | 710 | ZB2335 (10) | 110 | 14 | 29.3 | 9,11,12 |
| P | DOP | DLMC | none | 300 | 0.53 | 25.7 | A,K |
| Q | DOP | DLMC | $MoO_3$ (10) | 290 | 0.63 | 27.8 | P |
| 14 | OBC | DLMC | $MoO_3$ (10) | 110 | 14 | 34.1 | P,Q,10 |
| R | DOP | DLMC | Ongard (15) | 240 | 1.5 | 28.3 | P |
| 15 | OBC | DLMC | Ongard (15) | 190 | 3.6 | 36.1 | P,Q,R |

In an additional example to illustrate compatability with antimony trioxide (Example 16), the formulation of Example 1 was modified by reducing the content of $MoO_3$ to 5 parts and adding 5 parts antimony trioxide. $D_m$corr was increased only to 230 (transmittance 1.8%) and an oxygen index of 29.3 was achieved. In a similar example (Example 5) using DOP, the value of $D_m$corr was 360 (transmittance 0.18%), which is higher than in Example A with the same plasticiser and filler and no smoke suppressant nor antimony trioxide.

Table 7 illustrates modifications to the formulation of Example 1 by replacing part of the OBC with an equal weight of DOP, and shows that a worthwhile advantage can be obtained (at reduced cost) using the plasticisers defined in combination with a conventional plasticiser.

TABLE 7

| | Composition | | | NBS smoke chamber test | | | |
|---|---|---|---|---|---|---|---|
| Example | Plasticiser | Filler | Smoke suppressant (parts by weight) | Corrected maximum optical density $D_m$corr | Transmittance T(%) | Oxygen index | Compare with example(s) |
| A | DOP | 7ML | None | 310 | 0.45 | 23.0 | — |
| B | DOP | 7ML | $MoO_3$ (10) | 170 | 5.1 | 27.2 | A |
| G | OBC | 7ML | None | 300 | 0.53 | 22.6 | A,C,E |
| 1 | OBC | 7ML | $MoO_3$ | 80 | 24 | 24.8 | B,D,F,G |
| 17 | 40 OBC +10DOP | 7ML | $MoO_3$ (10) | 100 | 17 | — | G,1 |
| 18 | 30 OBC +20DOP | 7ML | $MoO_3$ (10) | 110 | 14 | 27.2 | G,1,17 |

Table 8 illustrates the use of various esters of pentaerythritol and di-pentaerythritol (including some outside the scope of the invention). Since not all are primary plasticisers, a proportion of DOP was used in all cases:

TABLE 8

| | | Composition | | | NBS smoke chamber test | | |
|---|---|---|---|---|---|---|---|
| Example | DOP | Other plasticiser (parts by weight) | Filler | Smoke suppressant (parts by weight) | Corrected maximum optical density $D_m$corr | Transmittance T(%) | Compare with example(s) |
| 17 | 10 | OBC (40) | 7ML | $MoO_3$ (11) | 100 | 17 | — |
| 18 | 20 | OBC (30) | 7ML | $MoO_3$ (10) | 110 | 14 | — |
| S | 20 | LP3 (30) | 7ML | none | 300 | 0.53 | — |
| 19 | 20 | LP3 (30) | 7ML | $MoO_3$ (10) | 140 | 8.7 | 18,S |
| T | 20 | SR2 (30) | 7ML | none | 230 | 1.8 | S |
| U | 20 | SR2 (30) | 7ML | $MoO_3$ (10) | 210 | 2.5 | 19 |
| V | 15 | LP6 (35) | 7ML | none | 300 | 0.53 | S |
| 20 | 15 | LP6 (35) | 7ML | $MoO_3$ (10) | 130 | 10 | 17/18,V |
| W | 15 | LP5 (35) | 7ML | $MoO_3$ (10) | 290 | 0.63 | |
| 21 | 15 | LP5 (35) | 7ML | $MoO_3$ (10) | 120 | 12 | |
| X | 20 | SR3 (30) | 7ML | none | 270 | 0.9 | S |
| Y | 20 | SR3 (30) | 7ML | $MoO_3$ (10) | 160 | 6.1 | 19 |
| Z | 20 | DPH (30) | 7ML | none | 280 | 0.75 | S |
| 22 | 20 | DPH (30) | 7ML | $MoO_3$ (10) | 110 | 14 | 19 |
| 23 | 10 | DPH (40) | 7ML | $MoO_3$ (10) | 110 | 14 | 19,21 |

**Claims**

1. A polymer composition comprising: polymeric material of which at least one third is constituted by a homopolymer or copolymer of vinylchloride; ten to one hundred parts per hundred parts of total polymeric material of plasticiser, being at least 30% of the total plasticiser present, selected from the organic esters of formula

$$\begin{array}{c} \qquad\qquad\qquad CH_2{-}R^3 \\ \qquad\qquad\qquad | \\ R^1{-}CO.O{-}CH_2{-}C{-}CH_2{-}O{-}R^2 \\ \qquad\qquad\qquad | \\ \qquad\qquad\qquad CH_2{-}R^4 \end{array}$$

in which

$R^1$ is selected from the alkyl groups up to C20;
$R^2$ is selected from H, the alkyl and acyl groups up to C20; and
$R^3$ and $R^4$, are independently selected from OH, alkoxy groups up to C20, and acyloxy groups up to C20, provided that not more than one of $R^2$, $R^3$ and $R^4$ is included among H, OH and alkyl,
such group (in every case) optionally having one or more than one substituent selected from alkyl groups up to C20, acyl groups up to C20 and acyloxy groups up to C20;

and effective amounts of at least one stabiliser and at least one smoke suppressant.

2. A polymer composition comprising: polymeric material of which at least one third is constituted by a homopolymer or copolymer of vinylchloride; ten to one hundred parts per hundred parts of total polymeric material of plasticiser, being at least 30% of the total plasticiser present selected from the organic esters of formula

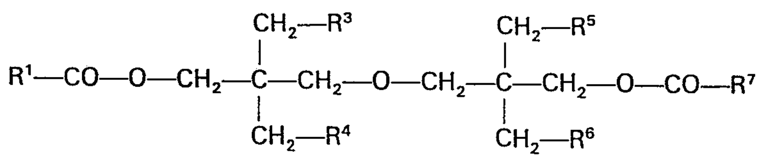

in which

$R^1$ and $R^7$ are selected from the alkyl groups up to C20 and
$R^3$, $R^4$, $R^5$ and $R^6$ are independently selected from H, OH, alkoxy groups up to C20, and acyloxy groups up to C20, provided that not more than two of $R^3$, $R^4$, $R^5$ and $R^6$ is included among H, OH and alkyl,
such group (in every case) optionally having one or more than one substituent selected from alkyl groups up to C20, acyl groups up to C20 and acyloxy groups up to C20;

and effective amounts of at least one stabiliser and at least one smoke suppressant.

3. A composition as claimed in Claim 1 in which $R^1$ is an unsubstituted alkyl group.

4. A composition as claimed in Claim 2 in which $R^1$ and $R^7$ are unsubstituted alkyl groups.

5. A composition as claimed in Claim 1 or Claim 3 in which $R^3$ and $R^4$ are unsubstituted acyloxy groups.

6. A composition as claimed in any one of the preceding Claims in which $R^3$, $R^4$, $R^5$ and $R^6$ are unsubstituted acyloxy groups.

7. A composition as claimed in any one of the preceding Claims in which $R^2$ is an unsubstituted acyl group.

8. A composition as claimed in any one of the preceding Claims in which all the R groups have at least three carbon atoms.

9. A composition as claimed in Claim 1 or Claim 2 in which the plasticiser is a fatty acid hexa-ester of dipentaerythritol.

10. A composition as claimed in Claim 1 in which the plasticiser is a fatty acid tetra-ester of pentaerythritol.

11. A composition as claimed in Claim 1 or Claim 2 in which the plasticiser is a mixed butyrate-caprylate hexa-ester of dipentaerythritol.

12. A composition as claimed in Claim 1 in which the plasticiser is a mixed butyrate-caprylate tetra-ester of pentaerythritol.

**Patentansprüche**

1. Polymerzusammensetzung, enthaltend: ein Polymermaterial, das zu mindestens einem Drittel aus einem Homopolymerisat oder einem Copolymerisat von Vinylchlorid besteht; 10 bis 100 Teile pro 100 Teile des gesamten Polymermaterials Weichmacher, wobei dieser Weichmacher mindestens 30% des Gesamtgehalts an Weichmachern ausmacht, aus der Gruppe der organischen Ester der nachstehenden allgemeinen Formel:

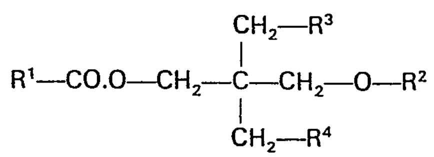

in der

$R^1$ einen Alkylrest mit bis zu 20 Kohlenstoffatomen bedeutet;
$R^2$ ein Wasserstoffatom, einen Alkyl- oder einen Acylrest mit bis zu 20 Kohlenstoffatomen bedeutet; und
$R^3$ und $R^4$ gleich oder verschieden sind und eine Hydroxylgruppe, einen Alkoxyrest mit bis zu 20 Kohlenstoffatomen oder Acyloxyreste mit bis zu 20 Kohlenstoffatomen bedeuten,
wobei höchstens einer der Reste $R^2$, $R^3$ und $R^4$ ein Wasserstoffatom, eine Hydroxylgruppe oder einen Alkylrest bedeutet,
wobei die erwähnten Reste (in jedem Falle) gegebenenfalls einen oder mehrere Substituenten aus der

nachstehenden Gruppe aufweisen: Alkylreste mit bis zu 20 Kohlenstoffatomen, Acylreste mit bis zu 20 Kohlenstoffatomen und Acyloxyreste mit bis zu 20 Kohlenstoffatomen;

sowie wirksame Mengen mindestens eines Stabilisators und mindestens eines rauchhemmenden Mittels.

2. Polymerzusammensetzung, enthaltend: ein Polymermaterial, das zu mindestens einem Drittel aus einem Homopolymer oder Copolymer von Vinylchlorid besteht; 10 bis 100 Teile pro 100 Teile des Gesamtpolymermaterials Weichmacher, wobei dieser Weichmacher mindestens 30% des Gesamtgehalts an Weichmachern ausmacht, aus der Gruppe der organischen Ester der nachstehenden allgemeinen Formel:

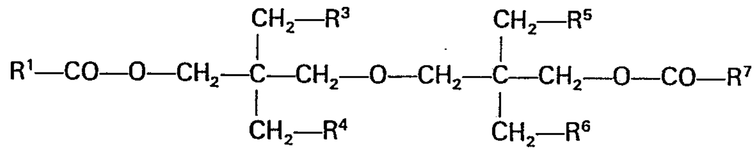

in der

$R^1$ und $R^7$ einen Alkylrest mit bis zu 20 Kohlenstoffatomen bedeuten und
$R^3$, $R^4$, $R^5$ und $R^6$ unabhängig voneinander aus der nachstehenden Gruppe gewählt sind: H, OH, Alkoxyreste mit bis zu 20 Kohlenstoffatomen, Acyloxyreste mit bis zu 20 Kohlenstoffatomen, wobei höchstens zwei der Reste $R^3$, $R^4$, $R^5$ und $R^6$ H, OH oder Alkyl bedeuten,
wobei diese Reste (in jedem Falle) gegebenenfalls durch mindestens einen Substituenten aus der nachstehenden Gruppe substituiert sind: Alkylreste mit bis zu 20 Kohlenstoffatomen, Acylreste mit bis 20 Kohlenstoffatomen und Acyloxyreste mit bis zu 20 Kohlenstoffatomen;

sowie wirksame Mengen von mindestens einem Stabilisator und mindestens einem rauchhemmenden Mittel.

3. Zusammensetzung nach Anspruch 1, dadurch gekennzeichnet, daß $R^1$ einen unsubstituierten Alkylrest bedeutet.

4. Zusammensetzung nach Anspruch 2, dadurch gekennzeichnet, daß $R^1$ und $R^7$ unsubstituierte Alkylreste bedeuten.

5. Zusammensetzung nach Anspruch 1 oder Anspruch 3, dadurch gekennzeichnet, daß $R^3$ und $R^4$ unsubstituierte Acyloxygruppen bedeuten.

6. Zusammensetzung nach jedem der vorstehenden Patentansprüche, dadurch gekennzeichnet, daß $R^3$, $R^4$, $R^5$ und $R^6$ unsubstituierte Acyloxygruppen bedeuten.

7. Zusammensetzung nach jedem der vorstehenden Patentansprüche, dadurch gekennzeichnet, daß $R^2$ einen unsubstituierten Acylrest bedeutet.

8. Zusammensetzung nach jedem der vorstehenden Patentansprüche, dadurch gekennzeichnet, daß alle Reste R mindestens drei Kohlenstoffatome aufweisen.

9. Zusammensetzung nach Anspruch 1 oder Anspruch 2, dadurch gekennzeichnet, daß der Weichmacher einen Fettsäure-Hexa-Ester von Dipentaerythrit ist.

10. Zusammensetzung nach Anspruch 1, dadurch gekennzeichnet, da der Weichmacher ein Fettsäure-Tetra-Ester von Pentaerythrit ist.

11. Zusammensetzung nach Anspruch 1 oder Anspruch 2, dadurch gekennzeichnet, daß der Weichmacher ein gemischter Butyrat-Caprylat-Hexa-Ester von Dipentaerythrit ist.

12. Zusammensetzung nach Anspruch 1, dadurch gekennzeichnet, daß der Weichmacher ein gemischter Butyrat-Caprylat-Tetra-Ester von Pentaerythrit ist.

**Revendications**

1. Composition polymère comprenant: une matière polymère dont au moins un tiers est constitué par un homopolymère ou un copolymère de chlorure de vinyle; 10 à 100 parties, pour cent parties de la matière polymère totale, d'un plastifiant qui forme au moins 30% du plastifiant total présent, et qui est choisi parmi les esters organiques de formule:

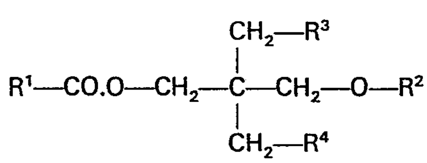

dans laquelle

$R^1$ est choisi parmi les radicaux alkyle jusqu'à $C_{20}$;
$R^2$ est choisi parmi H et les radicaux alkyle et acyle jusqu'à $C_{20}$, et

$R^3$ et $R^4$ sont choisis indépendamment parmi OH, les radicaux alcoxy jusqu'à $C_{20}$ et les radicaux acyloxy jusqu'à $C_{20}$,

à la condition que pas plus d'un des radicaux $R^2$, $R^3$ et $R^4$ soit choisi parmi H, OH et alkyle, un tel radical (dans chaque cas) ayant facultativement un ou plus d'un substituant choisi parmi les radicaux alkyle jusqu'à $C_{20}$, acyle jusqu'à $C_{20}$ et acyloxy jusqu'à $C_{20}$;

et des proportions efficaces d'au moins un stabilisant et d'au moins un suppresseur de fumée.

2. Composition polymère comprenant: une matière polymère dont un tiers au moins est constitué par un homopolymère ou un copolymère de chlorure de vinyle, dix à cent parties, pour cent parties de la matière polymère totale, de plastifiant qui forme au moins 30% du plastifiant total présent et qui est choisi parmi les esters organiques de formule:

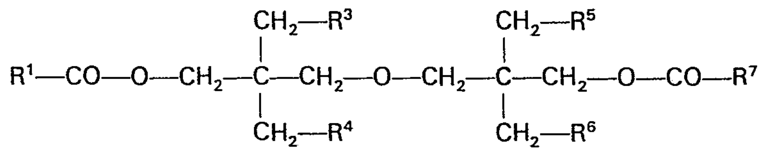

dans laquelle:

$R^1$ et $R^7$ sont choisis parmi les radicaux alkyle jusqu'à $C_{20}$, et

$R^3$, $R^4$, $R^5$ et $R^6$ sont choisis indépendamment parmi H, OH, les radicaux alcoxy jusqu'à $C_{20}$ et les radicaux acyloxy jusqu'à $C_{20}$, à la condition que pas plus de deux des $R^3$, $R^4$, $R^5$ et $R^6$ ne soient englobés parmi H, OH et alkyle, un tel groupe (dans chaque cas) portant éventuellement un ou plusieurs substituants choisis parmi les radicaux alkyle jusqu'à $C_{20}$, les radicaux acyle jusqu'à $C_{20}$ et les radicaux acyloxy jusqu'à $C_{20}$;

et des proportions efficaces d'au moins un stabilisant et d'au moins un suppresseur de fumée.

3. Composition selon la revendication 1, dans laquelle $R^1$ est un radical alkyle non substitué.

4. Composition selon la revendication 2, dans laquelle $R^1$ et $R^7$ sont des radicaux alkyle non substitués.

5. Composition selon la revendication 1 ou 3, dans laquelle les radicaux $R^3$ et $R^4$ sont des radicaux acyloxy non substitués.

6. Composition selon l'une quelconque des revendications précédentes, dans laquelle $R^3$, $R^4$, $R^5$ $R^6$ sont des groupes acyloxy non substitués.

7. Composition selon l'une quelconque des revendications précédentes dans laquelle $R^2$ est un radical acyle non substitué.

8. Composition selon l'une quelconque des revendications précédentes, dans laquelle tous les radicaux R contiennent au moins trois atomes de carbone.

9. Composition selon la revendication 1 ou 2, dans laquelle le plastifiant est un hexa-ester d'acide gras de dipentaérythritol.

10. Composition selon la revendication 1, dans laquelle le plastifiant est un tétra-ester d'acide gras de pentaéthythritol.

11. Composition selon la revendication 1 ou 2, dans laquelle le plastifiant est un hexa-ester mixte butyriquecaprylique de dipentaérythritol.

12. Composition selon la revendication 1, dans laquelle le plastifiant est un tétra-ester mixte butyriquecaprylique de pentaérythritol.